# EUROPEAN PATENT APPLICATION

(11) **EP 4 050 392 A1**
(43) Date of publication of application: **31.08.2022**
(21) Application number: 21159242.3
(22) Date of filing: 25.02.2021
(51) Int. Cl.: G02B 6/38, G02B 6/44

(54) **FIBER OPTIC STRAIN RELIEF**

(71) Applicant: Corning Research & Development Corporation, Corning, New York 14831 (US)
(72) Inventor: RUDA, Michal, Corning, NY New York 14831 (US); GAJEK, Max, Corning, NY New York 14831 (US); STRUNCK, Sven, Corning, NY New York 14831 (US); LIS, Walentin, Corning, NY New York 14831 (US); OZAREK, Dawid, Corning, NY New York 14831 (US)
(74) Representative: Reeve, Nicholas Edward

(57) **Abstract**

A fiber optic strain relief device is disclosed. The fiber optic strain relief device (100) comprises a body (110) for coupling with a fiber optic distribution terminal (200), and a first gripping element (120a) and a second gripping element (120b), each flexibly mounted on the body (110) and having adjacent and opposing gripping portions (124a,124b) for gripping a fiber optic cable (300) therebetween. The first and second gripping elements (120a, 120b) each include an engagement portion (125a,125b) for securing a cable strength element (310) wrapped around the first and second gripping elements to provide a gripping force between the first and second gripping elements. The fiber optic strain relief device (100) is compact and adaptable, and is capable of providing a strong gripping force on a fiber optic cable (300) in a fiber optic distribution terminal (200).

## Description

### TECHNICAL FIELD

This application relates to a fiber optic strain relief device, a fiber optic system and a method for relieving strain on a fiber optic cable in a fiber optic distribution terminal.

### BACKGROUND ART

Strain relief devices are often used in fiber optic networks, particular where fiber optic cables enter and exit a fiber optic distribution terminal. These fiber optic distribution terminals are commonly used in both indoor and outdoor applications for storage and connection of fiber optic cables.

One example of a fiber optic distribution terminal is the Building Access Terminal (BAT) range of fiber optic distribution terminals by Corning Optical Communications. This type of fiber optic distribution terminal is a wall mounted unit which contains various fiber optic handling components for directing and connecting, for example by splicing, one or more optical fibers. Typically strain relief devices are used at the cable entry and exit points in/out of the terminal.

Various types of strain relief are known, however such known devices have a number of limitations. In particular there is a problem with cable capacity with known strain reliefs, as the large size of the strain reliefs make it impossible to fit the desired number of cables and/or a high enough density of cables in the fiber optic distribution terminal. This is a particular problem in newer more compact fiber optic distribution terminal configurations. Moreover, known strain reliefs are unable to accommodate cables over a wide range of cable diameters.

We have appreciated that it would be desirable to provide an improved fiber optic strain relief device with a compact configuration, that has a low manufacturing cost and is simple and intuitive to operate, whilst still being capable of providing a large holding force on a fiber optic cable. Moreover, a fiber optic strain relief device which is adaptable to a wide range of cable diameters would be desirable.

### SUMMARY OF THE INVENTION

The invention is defined by the independent claims, to which reference should now be made. Advantageous features are set out in the dependent claims.

According to a first aspect of the present invention, a fiber optic strain relief device is provided. The fiber optic strain relief device comprises a body for coupling with a fiber optic distribution terminal. The fiber optic strain relief device comprises a first gripping element and a second gripping element, each flexibly mounted on the body and having adjacent and opposing gripping portions for gripping a fiber optic cable therebetween. The first and second gripping elements each include an engagement portion for securing a cable strength element wrapped around the first and second gripping elements to provide a gripping force between the first and second gripping elements.

The fiber optic strain relief device of the present invention provides an improved device that is simple to use and able to be manufactured at low cost, whilst still providing a strong gripping force and therefore providing excellent strain protection when coupled to a fiber optic cable in a fiber optic distribution terminal. The fiber optic strain relief device has a compact configuration that allows more fiber optic cables and/or a higher density of fiber optic cables to be coupled via a strain relief to a fiber optic distribution terminal.

The fiber optic strain relief device may be modular, and may comprise one or more connection elements suitable for connecting the fiber optic strain relief device to a second identical fiber optic strain relief device.

The one or more connection elements may be configured for coupling the fiber optic strain relief device to a second identical fiber optic strain relief device when either: the fiber optic strain relief device is in the same orientation about a longitudinal axis of the fiber optic strain relief device as the second identical fiber optic strain relief device; and/or the fiber optic strain relief device is rotated by 180 degrees about a longitudinal axis of the fiber optic strain relief device to oppose the second identical fiber optic strain relief device.

The fiber optic strain relief device may include a first connection element and a second connection element. The first connection element may be a female-type connector and may be mounted on a first side of the body of the fiber optic strain relief device. The second connection element may be a male-type connector and may be mounted on a second side of the body of the fiber optic strain relief device.

The modular nature of the fiber optic strain relief device allows a plurality of fiber optic strain relief devices to be stacked together. The compact shape of the strain reliefs combined with this space efficient stacking allows a larger number of fiber optic cables to pass through a given area, thus allowing the density of cables in the fiber optic distribution terminal to increase.

The modular nature of the fiber optic strain relief device also allows the assembly two fiber optic strain relief devices together to create larger strain relief device which has ability to hold a larger diameter cable. The fiber optic strain relief device may therefore be used with cables of various sizes, and may be adaptable to a large range of cable size due to the larger combined strain relief device. This results in a highly adaptable device, which can hold cables, for example, with a diameter between 2 and 8mm.

The connection elements allow simple assembly of the modular stack of fiber optic strain relief devices, for example by simply clicking the fiber optic strain relief devices together via one or more latches.

The gripping portions may define a channel for a fiber optic cable and may be suitable for placement in contact with a fiber optic cable that passes through the channel. The engagement portions may each include securing portions that extend away from the channel for the fiber optic cable and may be configured to secure the cable strength element when wrapped around the first and second gripping elements.

The use of the gripping portions and the wrapped cable strength element provides a large gripping force on a fiber optic cable, which fixes the fiber optic cable to the fiber optic strain relief device and in turn to a fiber optic distribution terminal. Therefore the risk of accidental cable pull or excessive strain on the fiber optic cable is prevented.

The securing portions may each comprise a pair of side walls that extend in planes perpendicular to a longitudinal axis of the channel between the first and second gripping elements, and extend in a radial direction from the channel. The pair of side walls may be a pair of parallel plates. The securing portions may be configured to secure the cable strength element between the pair of side walls when the cable strength element is wrapped around the first and second gripping elements.

The securing portions may each include one or more one or more teeth configured to retain the cable strength element within the securing portions.

Each securing portion may include one or more pairs of teeth, with each pair of teeth including a first tooth mounted on a first of the side walls in the securing portion and extending towards a second tooth mounted on the opposing side wall in the same securing portion.

The configuration of the securing portions provides a simple and intuitive mechanism for wrapping a cable strength element around the fiber optic strain relief, to allow easy installation and operation of the fiber optic strain relief device. The securing portions and the teeth ensure that the cable strength element does not work loose or unwrap from the fiber optic strain relief device, therefore ensuring the strong gripping force on the fiber optic cable is maintained.

The engagement portions may include recesses to accommodate the cable strength element when wrapped around the first and second gripping elements and to prevent the cable strength element extending beyond the external perimeter of the first and second gripping elements.

The securing portions may extend beyond the edge of the engagement portions in a direction perpendicular to a longitudinal axis of the channel to form the recesses. The cable strength element may pass through the recesses when wrapped around the first and second engagement portions.

The recesses prevent the cable strength element extending beyond the external perimeter of the device, and therefore prevent the cable strength element taking up unnecessary space, ensuring the fiber optic strain relief device is compact when installed. The recesses also allow the fiber optic strain relief devices to be stacked flush with each other when in a modular configuration, further increasing the efficient use of space by the strain relief device.

The first gripping element may comprise a first arm to flexibly mount the first gripping element to the body, and the second gripping element may comprise a second arm to flexibly mount the second gripping element to the body.

The flexible mounting of the gripping elements allows a channel between the gripping elements to be widened to accommodate fiber optic cables of different thicknesses and provide a gripping force on the fiber optic cable, and/or allows the channel to be narrowed when the cable strength element is wrapped around the gripping elements, to provide a strong gripping force on the fiber optic cable.

The first arm may be connected between the body and the gripping portion of the first gripping element, and the second arm may be connected between the body and the gripping portion of the second gripping element. A separation between the first arm and the second arm may decrease as you move along the each arm from the body of the fiber optic strain relief device towards the gripping portions of the first and second gripping elements.

The above described configuration increases the strength of the device, and the angle of the arms helps provide the gripping force between the first and second gripping elements. In addition, a force on a fiber optic cable in the direction away from the gripping portions and towards the body will pull the arms towards each other when the arms are configured as described above. Therefore the grip on the fiber optic cable will increase if the fiber optic cable is pulled from outside the fiber optic distribution terminal, further protecting the cable from accidental cable pull.

The body may include one or more mounting elements for coupling the fiber optic strain relief device to a fiber optic distribution terminal.

The mounting elements allow the fiber optic strain relief device to be coupled to the fiber optic distribution terminal, preventing the risk of accidental cable pull or excessive strain on the fiber optic cable.

The body may include an opening through which a fiber optic cable can pass, and a surrounding portion that the first and second gripping elements are flexibly mounted on.

The surrounding portion may be u-shaped, with first wall and a second wall extending from opposite ends of a third wall, the first and second walls opposing each other. The first gripping element may be flexibly mounted on the first wall and the second gripping element is flexibly mounted on the second wall.

The shape of the body allows the fiber optic strain relief device to be installed around and entry/exit point in the fiber optic distribution terminal. The u-shaped body combines with the u-shaped body of a second strain relief device when two devices are assembled together to create the larger strain relief device for a larger diameter cable.

The fiber optic strain relief device may be integrally formed. The device may therefore be manufactured easily and rapidly, as well as at a low cost.

The cable strength element may be a synthetic fiber, preferably an aramid fiber, and more preferably a Kevlar fiber.

The cable strength element may form part of a protective layer in a fiber optic cable that passes between the first and second gripping elements.

Using a cable strength element that is integral with the fiber optic cable reduces the number of components resulting in an efficient installation process. Moreover, the cable strength element being attached to the fiber optic cable results in a strong connection between the fiber optic cable and the fiber optic strain relief device.

According to a second aspect of the present invention, a fiber optic system is provided. The fiber optic system comprises a fiber optic distribution terminal, the fiber optic strain relief device of the first aspect of the present invention coupled to the fiber optic distribution terminal, and a fiber optic cable that passes between the first and second gripping elements of the fiber optic strain relief device. The fiber optic cable includes a cable strength element which is suitable for wrapping around the first and second gripping elements of the fiber optic strain relief device to provide a gripping force between the first and second gripping elements.

According to a third aspect of the present invention, a method of relieving strain on a fiber optic cable in a fiber optic distribution terminal is provided. The method comprises the steps of: inserting a fiber optic cable between the first and second gripping elements of the fiber optic strain relief device of the first aspect of the present invention; wrapping a cable strength element around the first and second gripping elements of the fiber optic strain relief device to provide a gripping force between the first and second gripping elements; and coupling the fiber optic strain relief device to a fiber optic distribution terminal.

In the above described system and method, the fiber optic strain relief device results in a strong connection between the fiber optic cable and the fiber optic distribution terminal, providing excellent protection for the fiber optic cable. The fiber optic strain relief is compact and can be stacked in a modular fashion, and is therefore highly space efficient within the fiber optic distribution terminal, allowing a large number and/or high density of fiber optic cables to be installed. The method of installation of the strain relief device is quick and simple, allowing rapid installation by a technician.

### BRIEF DESCRIPTION OF THE DRAWINGS

Embodiments of the invention will now be described in relation to the accompanying drawings, in which:
Figure 1 shows a front isometric view of a fiber optic strain relief device in a preferred embodiment of the present invention;
Figure 2 shows a rear isometric view of a fiber optic strain relief device in a preferred embodiment of the present invention;
Figure 3 shows wrapping of a cable strength element around a fiber optic strain relief device in a preferred embodiment of the present invention;
Figure 4 shows a front isometric view of first modular configuration using a fiber optic strain relief device of a preferred embodiment of the present invention;
Figure 5 shows a rear isometric view of first modular configuration using a fiber optic strain relief device of a preferred embodiment of the present invention;
Figure 6 shows wrapping of a cable strength element around a pair of stacked fiber optic strain relief devices in a preferred embodiment of the present invention;
Figure 7 shows a front isometric view of a second modular configuration using a fiber optic strain relief device of a preferred embodiment of the present invention;
Figure 8 shows a rear isometric view of a second modular configuration using a fiber optic strain relief device of a preferred embodiment of the present invention;
Figure 9 shows an exemplary fiber optic distribution terminal;
Figure 10 shows a strain relief of a preferred embodiment of the present invention coupled to an exemplary fiber optic distribution terminal;
Figure 11 shows a strain relief of a preferred embodiment of the present invention coupled to an exemplary fiber optic distribution terminal.

### DETAILED DESCRIPTION

A fiber optic strain relief device is disclosed. The fiber optic strain relief device 100 comprises a body 110 for coupling with a fiber optic distribution terminal 200, and a first gripping element 120a and a second gripping element 120b, each flexibly mounted on the body 110 and having adjacent and opposing gripping portions 124a,124b for gripping a fiber optic cable 300 therebetween. The first and second gripping elements 120a,120b each include an engagement portion 125a,125b for securing a cable strength element 310 wrapped around the first and second gripping elements to provide a gripping force between the first and second gripping elements. The fiber optic strain relief device 100 is compact and adaptable, and is capable of providing a strong gripping force on a fiber optic cable 300 in a fiber optic distribution terminal 200.

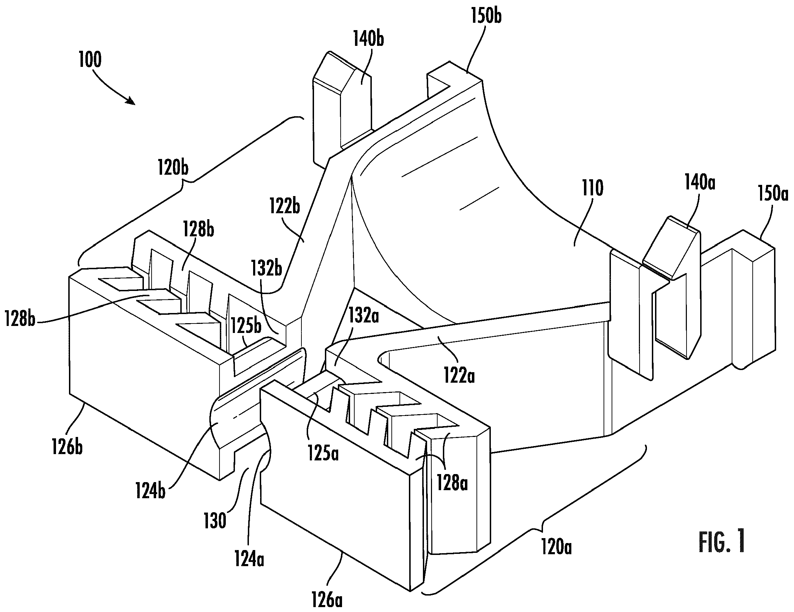

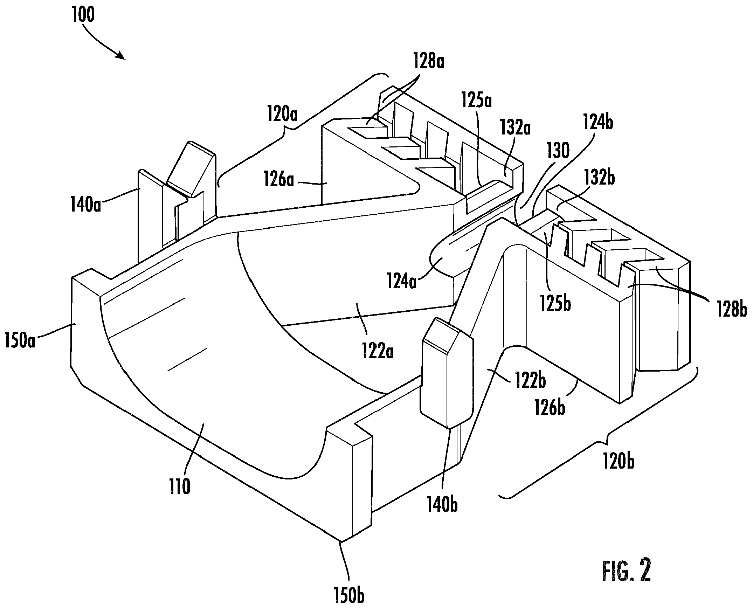

Figure 1 shows a front isometric view and Figure 2 shows a rear isometric view of a fiber optic strain relief device 100 in a preferred embodiment of the present invention. The fiber optic strain relief device 100 (also referred to as the strain relief 100 herein) includes a body 110, a first gripping element 120a and a second gripping element 120b. The first and second gripping elements 120a,120b (also referred to as the gripping elements 120 herein) are flexibly mounted to the body 110. The first and second gripping elements 120a,120b include a first gripping portion 124a and a second gripping portion 124b respectively (also referred to as the gripping portions 124 herein). The first and second gripping portions 124 are adjacent and opposing, and are configured to grip a fiber optic cable positioned between the first and second gripping portions 124. In other words, a channel 130 for a fiber optic cable 300 is formed between the gripping portions 124. The first and second gripping portions 124 are spaced apart to form the channel 130, and the first and second gripping portions may be the surface walls of the channel 130. The gripping portions 124 can be placed in contact with the fiber optic cable 300 that passes through the channel 130. The gripping portions 124 may have a rounded inner surface for placement against a fiber optic cable 300 that passes through the channel 130, to provide a more secure grip of the fiber optic cable 300. In the present embodiment, the gripping portions 124 are a pair of opposing concave walls extending in the direction of the longitudinal axis of the fiber optic cable 300 held within the channel 130.

The first and second gripping elements 120a,120b include a first engagement portion 125a and a second engagement portion 125b respectively (also referred to as the engagement portions 125 herein) to secure a cable strength element 310 that is wrapped around the first and second gripping elements 120 to provide a gripping force between the gripping elements 120. In the present embodiment, the engagement portions 125 are a rear surface of the first and second gripping portions 124, onto which the cable strength element 310 is seated when wrapped around the gripping elements 120.

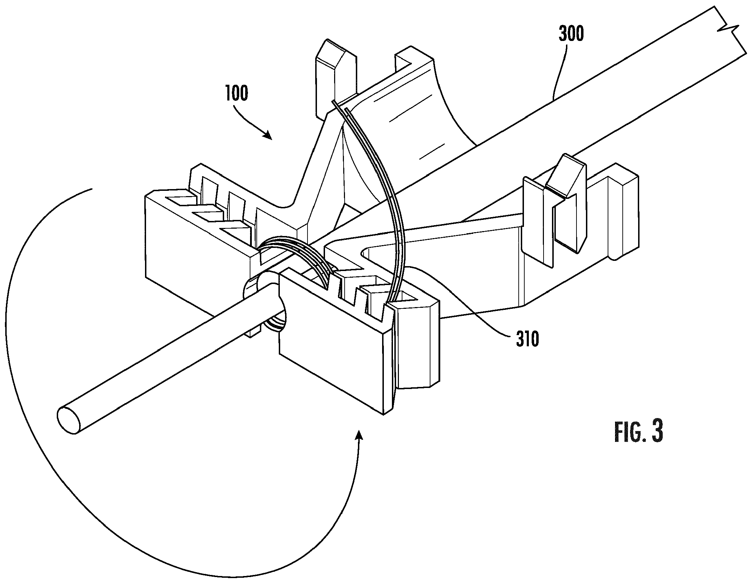

Figure 3 shows the cable strength element 310 being wrapped around the fiber optic strain relief device 100 of the present embodiment when a fiber optic cable 300 is inserted in the channel 130 between the gripping elements 120. An arrow is included in Figure 3 to demonstrate the wrapping direction of the cable strength element 310. The cable strength element 310 is wrapped around the first and second engagement portions 125, in order to squeeze the first and second gripping portions 124 (and hence the first and second gripping elements 120) together to produce a gripping force on the fiber optic cable 300.

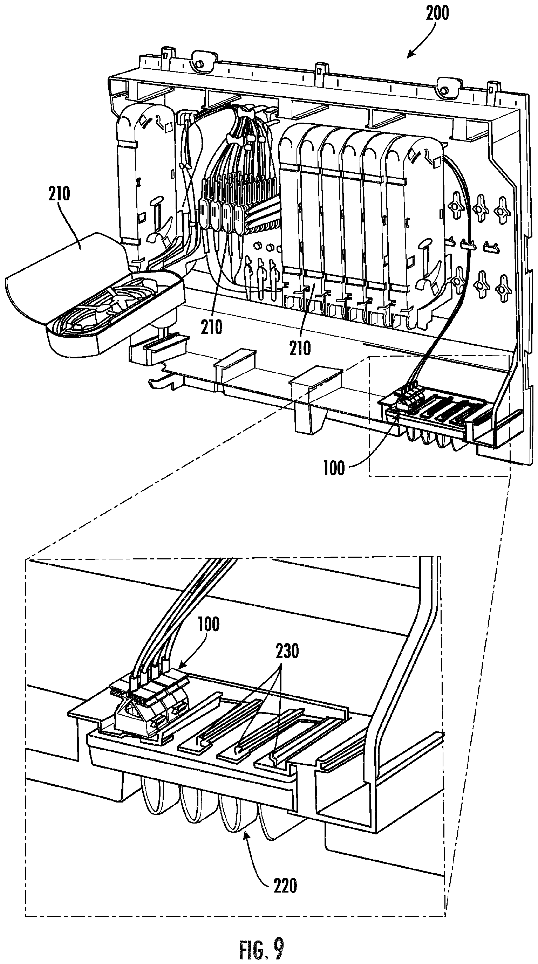

When the strain relief device 100 is installed, as will be discussed in more detail in Figures 9 to 11 later, the strain relief 100 is coupled to a fiber optic distribution terminal 200. The strain relief 100 will typically be connected to the fiber optic distribution terminal 200 at and entry/exit point 220 for a fiber optic cable 300. The fiber optic cable 300 is fed into of the fiber optic distribution terminal and through the channel 130 between the first and second gripping elements 120. The cable strength element 310 is then wrapped around the first and second gripping elements 120 to provide a gripping/clamping force between the first and second gripping elements. This gripping/clamping force grips the fiber optic cable 300 and fixes the fiber optic cable 300 to the fiber optic strain relief device 100. The strain relief 100 is in turn connected to the fiber optic distribution terminal 200, and therefore, through this configuration the fiber optic cable 300 is fixed to the fiber optic distribution terminal 200, preventing the risk of accidental cable pull or excessive strain on the fiber optic cable 300.

Any suitable string/fiber/cord/tie or the like may be used as the cable strength element 310. Preferably the cable strength element 310 is a synthetic fiber, more preferably an aramid fiber, such as a Kevlar fiber. The cable strength element 310 may be integral with the fiber optic cable 300, or alternatively the cable strength element 310 may be separate from the fiber optic cable 300, for example as separate spool of synthetic fiber. In some embodiments, a cable tie could act as the strength element 310.

In the case where the cable strength element 310 is integral with the fiber optic cable 300, the cable strength element may be one or more synthetic fibers that form part of a protective layer in a fiber optic cable 300 that passes between the first and second gripping portions 124. The cable strength element 310 may be formed from a strength member located between the core and the jacket of the fiber optic cable 300. Using a cable strength element 310 that is integral with the fiber optic cable reduces the number of components, resulting in an efficient installation process as well as a strong connection between the fiber optic cable 300 and the strain relief 100.

In some cases, the fiber optic cable to be inserted between the gripping elements 120 has the same diameter or a narrower diameter than the width of the channel 130 between the gripping portions 124. In this case the gripping force is provided wholly by the wrapping of the cable strength element 310 around the engagement portions 125. The flexible mounting of first and second gripping elements 120 allows them to move towards each other under the action of the cable strength element 310 in order to grip the fiber optic cable 300.

However, in other cases the fiber optic cable to be inserted between the gripping elements 120 has a wider diameter than the channel 130. The flexible mounting of the first and second gripping elements 120 allows the first and second gripping elements 120 to be flexed apart to widen the channel 130 and allow a fiber optic cable 300 to be inserted in the channel. In other words, the fiber optic cable 300 acts against the gripping portions 124 such that the deformation of the gripping elements 120 provides a counter gripping force on the fiber optic cable. The wrapping of a cable strength element 310 then provides an additional gripping force on the fiber optic cable 300.

The flexible mounting of first and second gripping elements 120 may be sufficiently resilient for that the strain relief 100 maintain its shape and maintain a substantial rigidity. In particular, the gripping elements 120 may be just flexible enough for them to be separated to accommodate a fiber optic cable, but sufficiently stiff/resilient to prevent any further separation of the first and second gripping elements.

The body 110 includes an opening through which a fiber optic cable 300 may pass, and a surrounding portion. The shape of the body 110 allows the fiber optic strain relief device to be installed around and entry/exit point 220 in the fiber optic distribution terminal 200. In the present embodiment the body 110 is u-shaped with a first, second and third wall forming the surrounding portion. The first wall and the second wall extend from opposite ends of the third wall, with the first and second walls opposing each other. In other embodiments, the body 110 may have various alternative shapes, including, but not limited to, a c-shaped body, an o-shaped body, or rectangular body with a central through hole or the like. The body 110 may have a rounded shape, or may have flat walls meeting at defined edges, or may have a combination of the two. In the present embodiment, the first gripping element 120a is flexibly mounted on the first wall of the body 110, and the second gripping element 120b is flexibly mounted on the second wall of the body 110.

The first and second gripping elements 120 may be flexibly mounted to the body 110 in various ways. In the present embodiment, the first and second gripping elements 120a,120b include a first arm 122a and a second arm 122b respectively (also referred to as the arms 122 herein). The gripping elements 120 are flexibly mounted to the body 110 by means of the first and second arms 122a,122b.

In the present embodiment, the first and second arms 122 attach to the first and second walls of the u-shaped body 110 respectively. The first arm 122a is connected between the body 110 and the gripping portion 124a of the first gripping element 120a, and the second arm 122b is connected between the body 110 and the gripping portion 124b of the second gripping element 120b. The arms extend in a tapering fashion between the body 110 and the gripping portions 124 of the first and second gripping elements 120. In other words the arms extend diagonally from the body 110 of the strain relief 100 to the gripping portions 124 of the gripping elements 120, such that the cross section of the strain relief 100 narrows as you move along the arms 122 away from the body 110. The arms 122 therefore extend towards each other as you move along the arms from the body 110 to the gripping portions 124 of the gripping elements 120. The separation between the first arm 122a and the second arm 122b therefore decreases as you move along the each arm from the body 110 towards the gripping portions 124.

The above described configuration of the arms 122 increases the strength of the device, and the angle of the arms helps provide the gripping force between the first and second gripping elements 120. In addition, a force on a fiber optic cable 300 in the direction away from the gripping portions 124 and towards the body 110 will pull the arms 122 towards each other when the arms are angled as described above. Therefore the grip on the fiber optic cable will increase if the fiber optic cable is pulled from outside the fiber optic distribution terminal, further protecting the cable from accidental cable pull.

As mentioned other configurations for flexibly mounting the gripping elements 120 to the body 100 may be used. For example, in some embodiments the first and second gripping elements may be directly mounted onto the body 110 without the use of the arms. In other words, the gripping portions 124, engagement portions 125, or the securing portions 126 which will be discussed below, may be flexibly connected directly to the body 110.

The body 110 is suitable for coupling with a fiber optic distribution terminal 200. The body 110 may include one or more mounting elements 150a, 150b for coupling the fiber optic strain relief device to a fiber optic distribution terminal 200. Various different mounting elements 150 could be used, including but not limited to screws, clips, pins, latches, adhesive elements or the like. In the present embodiment, the mounting elements 150 are a pair of flanges 150a,150b extending from the bottom edge of the first and second wall of the body 110. These flanges interface with mounting elements 230, such as rails, on the fiber optic distribution terminal 200 to attach the strain relief 100 to the fiber optic distribution terminal, as will be discussed in more detail later. The mounting elements 150 of the present embodiment are compatible with Coming's BAT-type fiber optic distribution terminal.

In some embodiments, the engagement portions 125 may further include securing portions 126. In the present embodiment, the first and second engagement portions 125a,125b include a first securing portion 126a and a second securing portion 126b respectively. The securing portions 126 secure the cable strength element 310 when wrapped around the first and second engagement portions 125, and keep the cable strength element 310 held in place wrapped around the gripping elements 120. The securing portions 126 extend away from the gripping portions 124 and from the channel 130 for the fiber optic cable 300, and provide an interior cavity for holding in place and storing the cable strength element 310.

In the present embodiment, the securing portions 126 extend away from the channel 130 up to a point in line with the outer periphery of the body 110. However, in other embodiments the securing portions 126 may extend beyond the outer of edge of the body 110, or may extend less than the outer edge of the body 110. The securing portions 126 are formed from a pair of side walls in each of the gripping elements 120 that extend in planes perpendicular to a longitudinal axis of the channel 130 between the first and second gripping elements 120, and extend in a radial direction from the channel 130. In other words the securing portions are a pair of parallel plates that are orthogonal to the first, second and third walls of the u-shaped body 110 in the present embodiment. The cable strength element 310 is wrapped around the gripping elements 120, in particular the engagement portions 125 and hence the gripping portions 124, and sits in the space (interior cavity) formed between the pairs of side walls in the securing portions 126.

In some embodiments, the securing portions 126 may each include one or more one or more teeth 128a,128b to retain and secure the cable strength element 310 within the securing portions 126. In other words, the teeth 128 are one or more fins that extend into the space between the side walls of the securing portions 126. The teeth 128 allow the cable strength element 310 to enter the interior cavity between the side walls of the securing portions 126, but prevent the cable strength element 310 from being easily removed once wrapped around the gripping elements 120. To achieve this, the teeth 128 extend from the inner surface of the side walls into the interior cavity of the securing portions 126, either perpendicularly from the side walls, or at an angle towards the gripping portions 124. The teeth may all extend at the same angle towards the gripping portions.

In the present embodiment, the teeth are arranged in pairs, such that a first tooth extends from a first of the side walls in the securing portions 126 and a second tooth extends from the opposite side wall in the same securing portion 126. This pair of teeth extend towards each other, but are separated by a gap just wide enough to allow the cable strength element 310 to pass between the teeth. The pair of teeth may extend directly towards each other (perpendicularly from the side walls/parallel plates), or may form a chevron shaped protrusion directed towards the gripping portions 124, with the narrow gap at the vertex of the chevron. Due to the narrow gap between the pair of teeth and, when present, the angle of the teeth towards the gripping portions 124, once the cable strength element 310 has moved past the pair of teeth in a direction towards the gripping portions 124, the cable strength element 310 cannot be easily removed back in a direction away from the gripping portions 124. Thus the teeth 128 secure the cable strength element 130 within the securing portions 126, and prevent the cable strength element 310 from slipping out of the gripping elements 120.

In the present embodiment three pairs of teeth 128 arranged as chevrons are used in each of the securing portions 126a,126b. However, any number of pairs of teeth 128 may be used. Moreover, in some embodiments teeth 128 may only be found on one wall of the pairs of side walls in each of the securing portions 126. In other words, each tooth could extend from a first of the side walls almost as far as the opposite side wall in the same securing portion 126. The narrow gap between the end of the tooth 128 and the opposite wall in the pair of side walls would act in a similar fashion to the narrow gap between the pairs of teeth in the present embodiment.

The first and second gripping elements 120 provide a configuration for wrapping a cable strength element 310 around the gripping elements 120 that results in a strong and reliable grip on a fiber optic cable 300 passing through the strain relief 100. The strain relief is easy to operate, as the user can easily wrap the cable strength element 310 tightly around the gripping portions 124 to hold the fiber optic cable 300 within the channel. The described securing portions 126 and teeth 128 ensure that the cable strength element 310 is securely held around the gripping elements 120 and does not work loose or unwrap.

In some embodiments, the the engagement portions 125 may include recesses 132a, 132b to accommodate the cable strength element 310 when the cable strength element is wrapped around the first and second gripping elements 120. The recesses 132 may be cut out portions or grooves which receive the cable strength element 310 and prevent the cable strength element 310 extending beyond the periphery of the gripping elements 120. In the present embodiment, the recesses 132 extend the entire length of the engagement portions 125 between the side walls of the securing portions 126. In other words, the recesses 132 are formed by the securing portions extending beyond the edge of the engagement portions 125 in a widthways direction of the engagement portions (perpendicular to the longitudinal axis of the channel 130). However in other embodiments, the recesses 132 may extend only over part of the engagement portions 124 in the longitudinal direction of the channel 130.

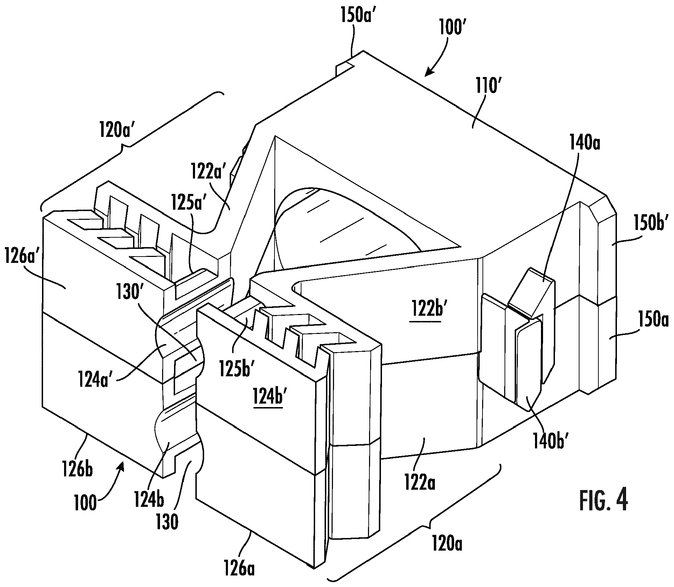

When wrapped around the gripping elements 120, the cable strength element 310 passes through the recesses 132 such that the cable strength element 310 does not protrude beyond the outer perimeter of the strain relief 100. This prevents the cable strength element 310 taking up unnecessary space, ensuring the strain relief 100 is compact when installed, and is also important when the strain relief is used in a modular configuration, as will be discussed in relation to Figures 4 to 8 later.

The fiber optic strain relief device 100 may be appropriately sized so as to accommodate any thickness of fiber optic cable. In some specific embodiments, the strain relief may be sized to accommodate fiber optic cables with a diameter of 2 to 4mm between the gripping portions 124. The size of the channel 130 between the first and second gripping elements 120 may be approximately 2 to 4 mm.

The fiber optic strain relief device 100 shown in Figures 1 to 3 may be integrally formed as a single piece. An integrally formed device results in a low product cost due to the simplicity of manufacture. Various methods may be used to manufacture the strain relief 100, such as injection molding or the like. The strain relief 100 may be molded out of various materials including plastic, for example.

The described fiber optic strain relief device 100 provides a compact strain relief, with the small size of the device allowing an increase in the number and/or density of fiber optic cables contained in a given area of the fiber optic distribution terminal 200. The strain relief 100 is simple and intuitive to use, whilst providing a strong holding force on a fiber optic cable coupled to the strain relief, therefore protecting the cable from damage or accidental cable pull.

In the embodiment described above, the strength element 310 is wrapped around the engagement portions 125 to provide the gripping force. However, in an alternate embodiment, the strength element 310 may be wrapped around the first and second arms 122a,122b to provide the gripping force between the gripping elements 120. In other words, the outer surfaces of the arms 122 may act as the engagement portions for the strength element 310. For example, a strength element separate from the fiber optic cable, such as a cable tie, may be secured around the arms 122, causing the gripping elements 120 to grip the fiber optic cable 300.

Next, use of the fiber optic strain relief device 100 as a modular device will be discussed. In some embodiments the fiber optic strain relief device 100 is modular, such that one or more identical strain reliefs may be combined and/or stacked when in use. The fiber optic strain relief device 100 may include one or more connection elements 140a,140b that are suitable for connecting the fiber optic strain relief device 100 to a second identical fiber optic strain relief device. The one or more connection elements 140 may be suitable for connecting the fiber optic strain relief device 100 to a second identical fiber optic strain relief device when the strain relief 100 is rotated by 180 degrees about a longitudinal axis of the channel 130 of the strain relief (the longitudinal axis of the strain relief 100), to oppose the second identical fiber optic strain relief device. This is the first modular configuration discussed below. Alternatively or additionally, the one or more connection elements 140 may be suitable for connecting the fiber optic strain relief device 100 to a second identical fiber optic strain relief device when the strain relief 100 is in the same orientation as the second identical fiber optic strain relief device. This is the second modular configuration discussed below. The one or more connection elements 140 may be suitable for connecting/stacking two identical strain reliefs 100 in both of the modular configurations described above.

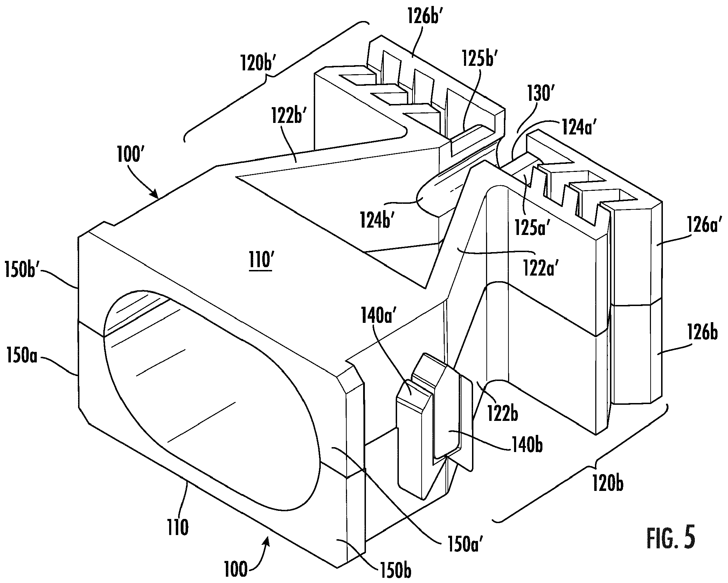

Figures 4 and 5 show a front and rear isometric view of a first modular configuration using the fiber optic strain relief device 100 of Figures 1 to 3. In the first modular configuration, a fiber optic strain relief device 100 is stackable with a second identical strain relief device 100' that opposes the first strain relief. In other words the two strain reliefs may be coupled together when one of them has been rotated by 180 degrees about an axis of the channel 130 of the strain relief (the longitudinal axis of the strain relief 100). In the present embodiment, the one or more connection elements 140a,140b of first strain relief 100 couple with one or more connection elements 140a',140b' of the second strain relief 100', in order to couple the strain reliefs together.

In more detail, in the present embodiment the fiber optic strain relief device 100 includes a first connection element 140a and a second connection element 140b. The first connection element 140a is a female-type connector and is mounted on a first side of the body 110 of the fiber optic strain relief device, for example on the first wall of the u-shaped body 110. The second connection element 140b is a male-type connector and is mounted on a second side of the body 110 of the fiber optic strain relief device, for example on the second wall of the u-shaped body 110. The identical second fiber optic strain relief device 100' includes identical connection elements 140a',140b'.

The one or more connection elements 140 may be any type of latch, or clip, or the like. In some embodiments, the one or more connection elements 140 may be latches, so that strain reliefs may be simply clicked together. In the present embodiment, with a male-type latch on a first side of the body 110 and a female-type latch on the a second side, the strain relief 100 may be coupled to a second identical strain relief 100' by rotating one of the strain relief by 180 degrees to enable the latches to be clicked together. In particular, the female-type connection element 140a of the first strain relief 100 couples with the male-type connection element 140b' of the second strain relief 100'. Similarly, the male-type connection element 140b of the first strain relief 100 couples with the female-type connection element 140a' of the second strain relief 100'.

The first modular configuration of Figures 4 and 5 provides a larger strain relief assembled from two individual strain reliefs 100,100'. This modular configuration allows two single strain reliefs to be used a one larger strain relief for thicker fiber optic cables. The strain reliefs may be appropriately sized so as to accommodate any thickness of fiber optic cable. In a specific embodiment, each strain relief is sized to accommodate fiber optic cables with a diameter of 2 to 4mm, and therefore the first modular configuration allows the combined strain reliefs to accommodate a fiber optic cable with twice the maximum thickness, up to 8mm thick. The flexible mounting of the gripping elements 120 to the body 110, in this case via the flexible arms 122, allows the channel 130 to be widened to accommodate the larger cable when the strain relief is used in the first modular configuration.

The fiber optic strain relief device 100 therefore provides a highly adaptable strain relief which can be used with a wide range of fiber optic cable sizes, with the first modular configuration allowing compatibility with a double thickness fiber optic cable compared to an individual strain relief. In the specific embodiment mentioned above, the strain relief 100 may be used with cables with diameters between 2 to 8 mm, either by using the strain relief 100 individually, or assembling a two piece strain relief via the first modular configuration.

As shown in Figure 5, in the present embodiment with a u-shaped body 110, the bodies 110,110' of the two strain reliefs 100,100' couple to form a combined o-shaped body. This provides an opening through which a larger fiber optic cable, for example the 8mm thick fiber optic cable, can pass. As described before, various other shapes are possible for the bodies 110,110' of the strain reliefs 100,100'.

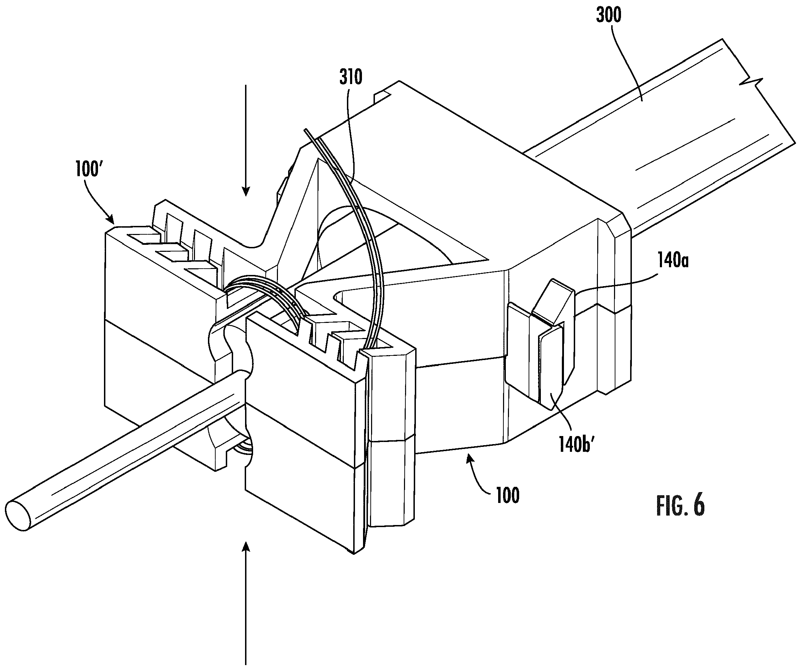

Figure 6 shows the wrapping of a cable strength element 310 around the pair of strain reliefs 100,100' when used in the first modular configuration. The method of securing the fiber optic cable 300 within the strain reliefs is analogous to for a single strain relief in Figure 3. When used in the first modular configuration, the channels 130,130' of the first and second strain reliefs 100,100' combine to provide a larger channel for the fiber optic cable 300. In the present embodiment, the cable strength element 310 is wrapped around the engagement portions 125,125' of both of the strain reliefs 100,100'.

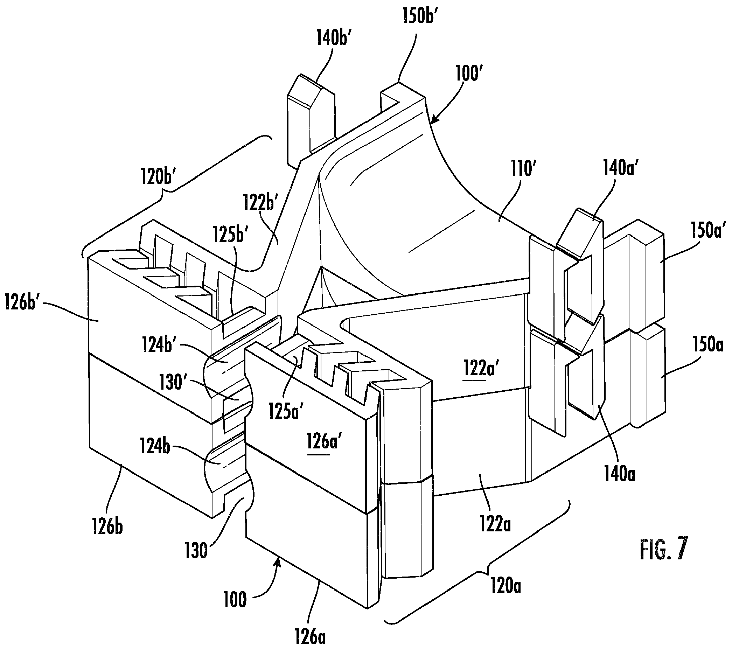

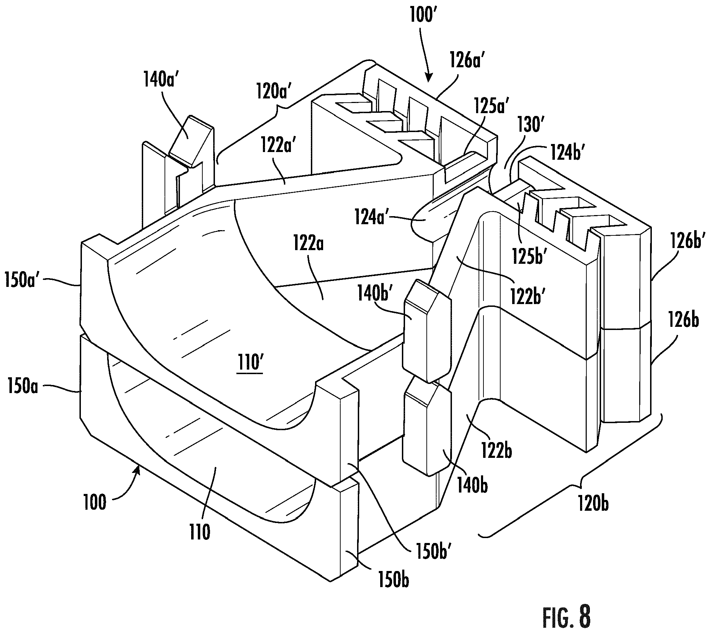

Figures 7 and 8 show a front and rear isometric view of a second modular configuration using the fiber optic strain relief device 100. In the second modular configuration, a fiber optic strain relief device 100 is stackable with a second identical strain relief device 100' that is in the same orientation (facing the same direction) as the first strain relief.

In the present embodiment, the connection elements 140 are configured as described in the first modular configuration. Therefore when the strain reliefs are stacked in the same orientation, as shown in Figures 7 and 8, the female-type connection elements 140a,140a' are positioned on the same side adjacent to each other, and the male-type connection elements 140b,140b' are positioned on the same side adjacent to each other. In this case the both the female-type connector 140a and the male-type connector 140b of the first strain relief 100 engage with the body 110' of the second strain relief 110', in order to couple the strain reliefs together and prevent movement of the strain reliefs with respect to each other in a direction perpendicular to the channels 130,130'. Moreover, as shown in Figure 7, the female-type connectors 140a,140a' are shaped so that the female-type connector 140a of the first strain relief 100 engages with a complementary shaped portion on the female-type connector 140a' of the second strain relief device 100', to couple the strain reliefs together and prevent movement of the strain reliefs with respect to each other in the longitudinal direction of the channels 130,130'. In the present embodiment, the complementary shaped portion is a triangular shaped cut-out in the female-type connector 140a of the first strain relief 100 that receives a protruding section of the female-type connector 140a' of the second strain relief 100'.

In the present embodiment, when stacked in the second modular configuration, each of the fiber optic strain reliefs 100,100' may be secured to a separate fiber optic cable 300 via the cable strength element 310 wrapping shown in Figure 3. The strain reliefs 100,100' may each be appropriately sized so as to accommodate any thickness of fiber optic cable. In a specific embodiment, each strain relief 100,100' may be sized to accommodate a fiber optic cable with a diameter of 2 to 4mm. When stacked in the second modular configuration the strain reliefs allow a number of closely positioned fiber optic cables to be connected to a fiber optic distribution terminal 200 via the fiber optic strain relief devices. The compact shape of the strain reliefs and space efficient stacking in the second modular configuration allows a larger number of fiber optic cables to pass through a given area, thus allowing the density of cables in the fiber optic distribution terminal 200 to increase.

As mentioned previously, the recesses 132, in the engagement portions 125 prevent the cable strength element 310 from protruding beyond the periphery of the strain relief 100, therefore allowing the strain reliefs to be stacked flush with each other in the second modular configuration. This further increases the efficient use of space by the strain relief.

Although the second modular configuration has been discussed in relation to two strain reliefs, any number of strain reliefs may be stacked in the second modular configuration, with each strain relief in the same orientation. Moreover, strain reliefs combined via the first modular configuration may be stacked with other individual strain reliefs through the second modular configuration. In other words, a combination of both the first modular configuration and the second modular configuration may be used within one stack of strain reliefs. Any number of identical strain reliefs may be stacked, with each strain relief either in a first orientation, or in a second orientation which is rotated by 180 degrees about the longitudinal axis of the strain relief 100 (or channel 130) compared to the first orientation, so as to oppose the first orientation. Some of these strain reliefs may be coupled to the adjacent strain relief as in the first modular configuration to produce one larger combined strain relief, and others may be coupled to the adjacent strain relief as in the second modular configuration to continue to act as an individual strain relief. Therefore the fiber optic strain relief 100 may be used in a modular fashion in a highly adaptable way. Any number of fiber optic cables with varying thicknesses may be protected from accidental cable pull by using a stack of a suitable number of suitably oriented modular fiber optic strain reliefs 100. Each of the fiber optic cables can be fixed to one strain relief in the stack, analogously to Figure 3, or can be fixed to a pair of strain reliefs in the stack, analogously to Figure 6. The resulting combined strain relief stack is highly space efficient, allowing a large number of fiber optic cables to fit within a given area.

When the fiber optic strain relief devices 100 are used in a stacked configuration, the entire stack may be coupled as one to the fiber optic distribution terminal 200. Alternatively, each of the strain reliefs 100 may be coupled to the fiber optic distribution terminal 200 independently. The individual strain reliefs 100 or stack of strain reliefs 100 may be coupled to the fiber optic distribution terminal 200 via the mounting elements 150 as discussed previously.

An exemplary fiber optic distribution terminal 200 is shown in Figure 9. The fiber optic distribution terminal 200 in Figure 9 is a Corning BAT-type fiber optic distribution terminal, however various types of fiber optic distribution terminal may be used. The fiber optic distribution terminal 200 includes a number of fiber optic components 210 for connecting, storing, splicing optical fibers, or the like. The fiber optic distribution terminal 200 includes a number of cable entry and exit points 220 in/out of the terminal. The fiber optic strain relief devices are typically used to secure cables at these entry and exit points 220. The fiber optic distribution terminal therefore includes one or more mounting points 230 in proximity to the entry and exit points 220, to which fiber optic strain relief devices 100 may be mounted.

In the specific fiber optic distribution terminal of Figure 9, the mounting points 230 are sets of rails/channels on either side of the entry and exit points 220. In the preferred embodiment of the fiber optic strain relief device 100 shown in Figures 1 to 8, the strain relief 100 includes flanges as the mounting elements 150. These flanges are compatible with Coming's BAT-type fiber optic distribution terminal, and are suitable for interfacing with the rails (mounting points 230) on the fiber optic distribution terminal 200 to attach the strain relief to the fiber optic distribution terminal. In particular, a rail 230 may be included on each side of an entry/exit point 220, and a grove may be present in the side of each of the rails facing the entry/exit point. The flanges 150 on the fiber optic strain relief device 100 can slot into the grove, which seats the strain relief device in place with the channel 130 of the strain relief device in line with the entry/exit point 220 in the fiber optic distribution terminal 200. The mounting points 230 may therefore be thought of as a port or socket into which a connector in the form of the body 110 of the strain relief 100, and in particular the mounting elements 150, may be inserted.

The mounting elements 150 of the strain relief 100 interface and couple with the mounting points 230 on the fiber optic distribution terminal 200, to couple the strain relief to the fiber optic distribution terminal 200. Either individual (non-assembled) strain reliefs 100 may couple to the mounting points 230 in the fiber optic distribution terminal, or a stack of strain reliefs 100 assembled in the first and/or second modular configuration may couple to the mounting points 230 in the fiber optic distribution terminal. Figure 9 shows a stack of multiple strain reliefs 100 coupled to the fiber optic distribution terminal.

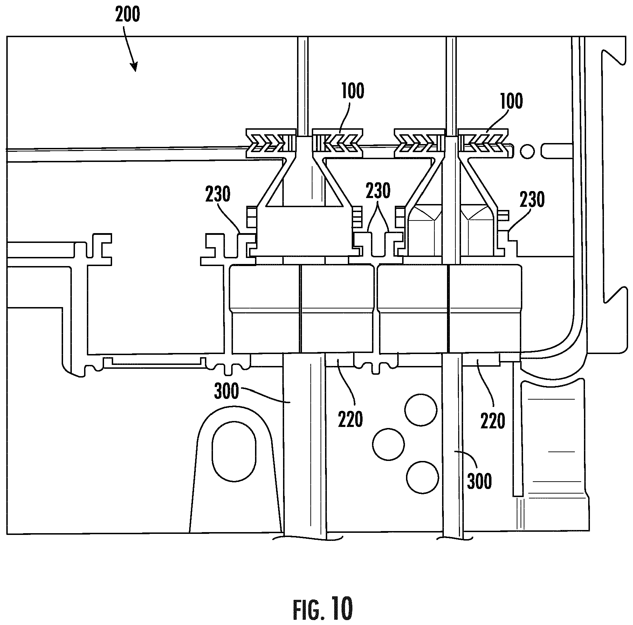

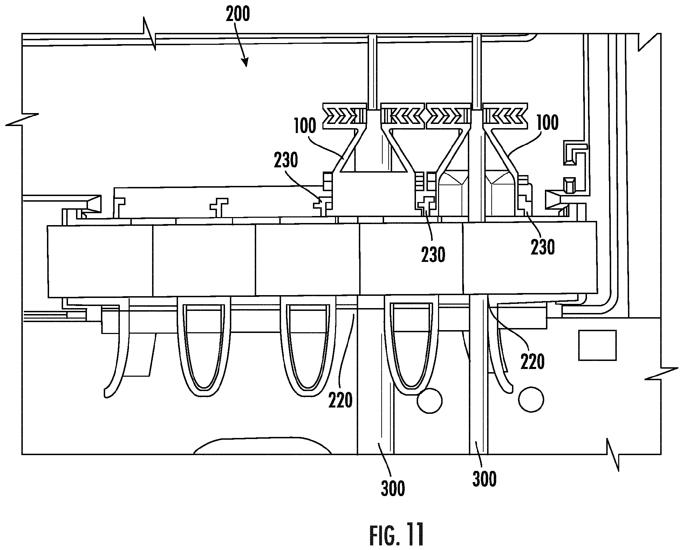

Figures 10 and 11 show in more detail a number of fiber optic strain relief devices 100 of the preferred embodiment of the present invention coupled to a fiber optic distribution terminal 200. In Figure 10 the fiber optic distribution terminal 200 is Coming's BAT S type terminal, and in Figure 11 the fiber optic distribution terminal 200 is Coming's BAT XL type terminal. However, any time of fiber optic distribution terminal may be used.

Although the strain relief of the preferred embodiment has been described in relation BAT type fiber optic distribution terminals, minor modifications would allow compatibility with any type of fiber optic distribution terminal, as would be understood by the skilled person. Specifically, the mounting elements 150 on the strain relief and/or the mounting points 230 on the fiber optic distribution terminal may be modified so that they are complementary with each other.

The compact design of the fiber optic strain relief device 100 of the present invention allows more fiber optic cables and/or a higher density of fiber optic cables to be coupled via strain reliefs to a fiber optic distribution terminal. As well as an increase in cable capacity, the fiber optic strain relief device 100 may be used with cables of various sizes, and may be adaptable to a large range of cable sizes due to the larger combined strain relief of the first modular configuration. The fiber optic strain relief device 100 is simple to use and able to be manufactured at low cost, whilst still providing a strong gripping force and therefore providing excellent strain protection when coupled to a fiber optic cable.

Although the invention has been described in relation to the preferred embodiment shown in the Figures, various other embodiments are possible, as outlined throughout the above description. Examples of specific products available on the market are for exemplary purposes only, and should not be seen as limiting the claimed invention. Various modifications to the embodiments described above are possible and will occur to those skilled in the art without departing from the scope of the invention which is defined by the following claims.

## Claims

1. A fiber optic strain relief device (100) comprising:
a body (110) for coupling with a fiber optic distribution terminal (200); and
a first gripping element (120a) and a second gripping element (120b), each flexibly mounted on the body (110) and having adjacent and opposing gripping portions (124a, 124b) for gripping a fiber optic cable (300) therebetween; wherein
the first and second gripping elements (120a, 120b) each include an engagement portion (125a,125b) for securing a cable strength element (310) wrapped around the first and second gripping elements to provide a gripping force between the first and second gripping elements.

2. The fiber optic strain relief device (100) of claim 1 wherein:
the fiber optic strain relief device (100) is modular; and
the fiber optic strain relief device (100) comprises one or more connection elements (140) suitable for connecting the fiber optic strain relief device to a second identical fiber optic strain relief device.

3. The fiber optic strain relief device (100) of claim 2, wherein the one or more connection elements (140) are configured for coupling the fiber optic strain relief device to a second identical fiber optic strain relief device when either:
the fiber optic strain relief device (100) is in the same orientation about a longitudinal axis of the fiber optic strain relief device as the second identical fiber optic strain relief device; and/or
the fiber optic strain relief device (100) is rotated by 180 degrees about a longitudinal axis of the fiber optic strain relief device to oppose the second identical fiber optic strain relief device.

4. The fiber optic strain relief device (100) of any preceding claim, wherein:
the fiber optic strain relief device includes a first connection element (140a) and a second connection element (140b);
the first connection element (140a) is a female-type connector and is mounted on a first side of the body (110) of the fiber optic strain relief device;
the second connection element (140b) is a male-type connector and is mounted on a second side of the body (110) of the fiber optic strain relief device.

5. The fiber optic strain relief device (100) of any preceding claim, wherein:
the gripping portions (124a,124b) define a channel (130) for a fiber optic cable (300) and are suitable for placement in contact with a fiber optic cable that passes through the channel; and
the engagement portions (125a,125b) each include securing portions (126a,126b) that extend away from the channel (130) for the fiber optic cable (300) and are configured to secure the cable strength element (310) when wrapped around the first and second gripping elements (120a,120b).

6. The fiber optic strain relief device (100) of claim 5, wherein
the securing portions (126a,126b) each comprise a pair of side walls that extend in planes perpendicular to a longitudinal axis of the channel (130) between the first and second gripping elements (120a,120b), and extend in a radial direction from the channel (130); and
the securing portions (126a,126b) are configured to secure the cable strength element (310) between the pair of side walls when the cable strength element is wrapped around the first and second gripping elements (120a,120b).

7. The fiber optic strain relief device (100) of claims 5 or 6, wherein the securing portions (126a,126b) each include one or more one or more teeth (128) configured to retain the cable strength element (310) within the securing portions.

8. The fiber optic strain relief device (100) of claim 7, wherein each securing portion (126a,126b) includes one or more pairs of teeth (128), with each pair of teeth including a first tooth mounted on a first of the side walls in the securing portion (126a,126b) and extending towards a second tooth mounted on the opposing side wall in the same securing portion.

9. The fiber optic strain relief device (100) of any of claims 5 to 8, wherein the engagement portions (125a,125b) include recesses (132a,132b) to accommodate the cable strength element (310) when wrapped around the first and second gripping elements (120a,120b) and to prevent the cable strength element extending beyond the external perimeter of the first and second gripping elements.

10. The fiber optic strain relief device (100) of claim 9, wherein:
the securing portions (126a,126b) extend beyond the edge of the engagement portions (125a,125b) in a direction perpendicular to a longitudinal axis of the channel (130) to form the recesses (132a,132b);
the cable strength element (310) passes through the recesses (132a, 132b) when wrapped around the first and second engagement portions (125a,125b).

11. The fiber optic strain relief device (100) of any preceding claim, wherein:
the first gripping element (120a) comprises a first arm (122a) to flexibly mount the first gripping element to the body (110); and
the second gripping element (120b) comprises a second arm (122b) to flexibly mount the second gripping element to the body (110).

12. The fiber optic strain relief device (100) of claim 11, wherein:
the first arm (122a) is connected between the body (110) and the gripping portion (124a) of the first gripping element (120a), and the second arm (122b) is connected between the body (110) and the gripping portion (124b) of the second gripping element (120b);
a separation between the first arm (122a) and the second arm (122b) decreases as you move along the each arm from the body (110) of the fiber optic strain relief device (100) towards the gripping portions (124a,124b) of the first and second gripping elements (120).

13. The fiber optic strain relief device (100) of any preceding claim, wherein the cable strength element (310) forms part of a protective layer in a fiber optic cable (300) that passes between the first and second gripping elements (120a,120b).

14. A fiber optic system comprising:
a fiber optic distribution terminal (200);
the fiber optic strain relief device (100) of any of claims 1 to 13 coupled to the fiber optic distribution terminal (200); and
a fiber optic cable (300) that passes between the first and second gripping elements (120a, 120b) of the fiber optic strain relief device (100);
wherein the fiber optic cable (300) includes a cable strength element (310) which is suitable for wrapping around the first and second gripping elements (120a,120b) of the fiber optic strain relief device (100) to provide a gripping force between the first and second gripping elements.

15. A method of relieving strain on a fiber optic cable (300) in a fiber optic distribution terminal (200), the method comprising the steps of:
inserting a fiber optic cable (300) between the first and second gripping elements (120a, 120b) of the fiber optic strain relief device (100) of any of claims 1 to 13;
wrapping a cable strength element (310) around the first and second gripping elements (120a,120b) of the fiber optic strain relief device to provide a gripping force between the first and second gripping elements; and
coupling the fiber optic strain relief device (100) to a fiber optic distribution terminal (200).
